# EUROPÄISCHE PATENTANMELDUNG

(11) **EP 1 146 422 A1**
(43) Veröffentlichungstag der Anmeldung: **17.10.2001**
(21) Anmeldenummer: 00810322.8
(22) Anmeldetag: 13.04.2000
(51) Int. Cl.: G06F 9/46

(54) **Verfahren zum Einrichten einer Kommunikationsverbindung zwischen einem Embedded Server und einem Clientrechner**

(71) Anmelder: ABB RESEARCH LTD., 8050 Zürich (CH)
(72) Erfinder: Fabri, Andreas, Dr., 8002 Zürich (CH); Nieva, Txomin, Dipl.-Ing., 1007 Lausanne (CH); Auf der Maur, Dominik, Dipl.-Ing., 5408 Ennetbaden (CH)
(74) Vertreter: ABB Patent Attorneys

(57) **Zusammenfassung**

Ein Verfahren zur Kommunikation mit einem Gerät weist die folgenden Schritte auf:
a) Ein Embedded Server (1) des Gerätes, welche Mittel zum Speichern eines Steuerprogramms (11) und eines Komponentenladers (12) aufweist, übermittelt den Komponentenlader (12) an einen Applikationsserver (2),
b) der Komponentenlader (12) bewirkt im Applikationsserver (2), dass eine Business-Applikation (13), welche in einem Komponentenserver (3) gespeichert ist, dem Applikationsserver (2) übermittelt wird,
c) die Business-Applikation (13) wird im Applikationsserver (2) ausgeführt und bewirkt eine Kommunikation zwischen einem Clientprogramm (14), welche auf einem Clientrechner (4) ausgeführt wird, und dem Steuerprogramm (11), welches auf dem Embedded Server (1) ausgeführt wird.

Dadurch wird es möglich, die Kommunikation zwischen dem Clientprogramm (14) und dem Steuerprogramm (11) einzurichten und zu betreiben, wobei die dazu verwendete Business-Applikation (13) automatisch in den Applikationsserver (2) geladen wird.

## Beschreibung

### Technisches Gebiet

Die Erfindung bezieht sich auf das Gebiet der industriellen Automatisierungstechnik. Sie bezieht sich auf ein Verfahren und ein Computerprogramm zum Einrichten einer Kommunikationsverbindung mit einem Gerät gemäss dem Oberbegriff der Patentansprüche 1 und 7.

### Stand der Technik

Zur Ansteuerung eines Gerätes wird oftmals ein bekanntes Client-Server Kommunikationsmodell verwendet. Dabei weist das Gerät oder eine Steuereinheit des Gerätes eine Datenverarbeitungseinheit oder Embedded Server auf, auf welchem ein Computerprogramm zur Steuerung und Überwachung des Gerätes ausgeführt wird. Der Embedded Server ist über eine Kommunikationsverbindung, das heisst eine Punkt zu Punkt-Verbindung oder ein Computernetzwerk mit einem Clientrechner verbunden. Auf dem Clientrechner wird eine Client-Applikation ausgeführt. Die Client-Applikation schickt über die Kommunikationsverbindung Anfragen an den Embedded Server respektive ein Steuerprogramm, welches auf dem Embedded Server ausgeführt wird.. Entsprechende Antworten des Embedded Servers werden durch die Client-Applikation weiterverarbeitet und beispielsweise für einen Benutzer dargestellt. Die Antworten des Embedded Servers werden, wie in der US 5,805,442 offenbart, gemäss einem HTML, XML oder einem verwandten Protokoll dargestellt, so dass der Embedded Server einen Web-Server zur Erzeugung der Antworten aufweist. Dieser Web-Server respektive eine entsprechende Programmkomponente zur Präsentation von Daten der Steuereinheit wird auch Business Logic oder Business-Applikation genannt. Er ist unter Umständen im Vergleich zu einer reinen Steuerungssoftware des Embedded Servers umfangreich, und benötigt entsprechend viel Rechenzeit und Speicherplatz auf dem Embedded Server. Deshalb wird in einer dreistufigen, sogenannten "three-tier"-Architektur, ein sogennanter Applikationsserver in einer weiteren Datenverarbeitungseinheit eingesetzt. Der Applikationsserver enthält den Web-Server mit der Business-Applikation und kommuniziert sowohl mit der Client-Applikation als auch mit dem Embedded Server. Der Applikationsserver wandelt Anfragen der Client-Applikation in Anfragen an den Embedded Server um und wandelt Antworten des Embedded Servers in Antworten an die Client-Applikation um. Dadurch wird der Embedded Server entlastet. Typischerweise sind die ungewandelten Antworten umfangreicher als die Antworten des Embedded Servers, so dass auch die Kommunikationsverbindung zum Embedded Server entlastet wird.

Bei dieser dreistufigen Architektur stellt sich das Problem, im Applikationsserver die passende Business-Applikation zu einem Embedded Server zu installieren. Dies wird üblicherweise von Hand gemacht, was aber bei einer Vielzahl von Geräten sehr aufwändig ist. Auch ist ein hoher Aufwand erforderlich, wenn ein System eine Vielzahl von Geräten aufweist und sich eine Konfiguration dieser Geräte dauernd ändert.

### Darstellung der Erfindung

Es ist deshalb Aufgabe der Erfindung, ein Verfahren und ein Computerprogramm zum Einrichten einer Kommunikationsverbindung zwischen einem Embedded Server und einem Clientrechner der eingangs genannten Art zu schaffen, welche die oben genannten Nachteile beheben.

Diese Aufgabe lösen ein Verfahren und ein Computerprogramm zum Einrichten einer Kommunikationsverbindung zwischen einem Embedded Server und einem Clientrechner mit den Merkmalen der Patentansprüche 1 und 7.

Das erfindungsgemässe Verfahren zum Einrichten einer Kommunikationsverbindung zwischen einem Embedded Server und einem Clientrechner weist die folgenden Schritte auf:
a) Ein Embedded Server des Gerätes, welches Mittel zum Speichern eines Steurprogramms und eines Komponentenladers aufweist, übermittelt den Komponentenlader an einen Applikationsserver,
b) der Komponentenlader bewirkt im Applikationsserver, dass eine Business-Applikation, welche in einem Komponentenserver gespeichert ist, dem Applikationsserver übermittelt wird,
c) die Business-Applikation wird im Applikationsserver ausgeführt und bewirkt eine Kommunikation zwischen einem Clientprogramm, welches auf dem Clientrechner ausgeführt wird, und dem Steuerprogramm, welches auf dem Embedded Server ausgeführt wird.

Dadurch wird es möglich, die Kommunikation zwischen dem Embedded Server und dem Clientrechner, respektive zwischen dem Steuerprogramm und dem Clientprogramm einzurichten und zu betreiben, wobei die dazu verwendete Business-Applikation automatisch in den Applikationsserver geladen wird. Dadurch entfällt eine manuelle Installation der Business-Applikation. Dies ist insbesondere dann von Vorteil, wenn mehrere Geräte mit jeweils einem eigenen Embedded Server häufig an ein Gesamtsystem angeschlossen und wieder von diesem getrennt werden.

Ein weiterer Vorteil der Erfindung ist, dass Anpassungen der Business-Applikation zentral im Komponentenserver ausgeführt werden können.

In einer bevorzugten Variante der Erfindung sind im Komponentenlader Informationen über eine Netzwerkadresse des Komponentenservers gespeichert.

Weitere bevorzugte Ausführungsformen gehen aus den abhängigen Patentansprüchen hervor.

### Kurze Beschreibung der Zeichnungen

Im folgenden wird die Erfindung anhand eines bevorzugten Ausführungsbeispiels, welches in den beiliegenden Zeichnungen dargestellt ist, näher erläutert. Es zeigen:
- Figur 1: schematisch eine Struktur von Datenverarbeitungseinheiten, auf welchen das erfindungsgemässe Verfahren ausgeführt wird; und
- Figuren 2 bis 5: schematisch einen Ablauf des erfindungsgemässen Verfahrens.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

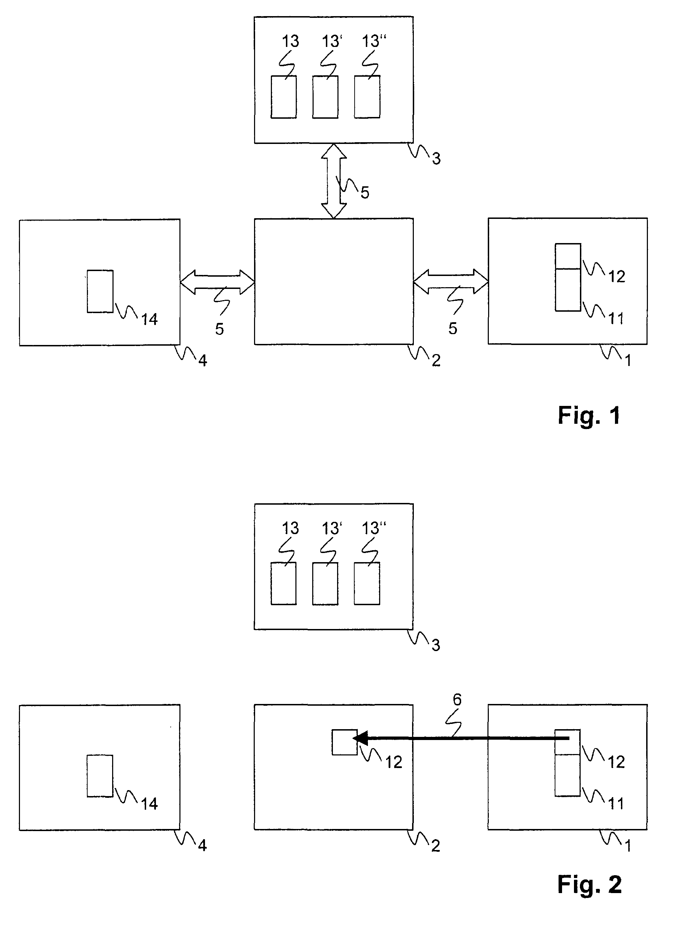

Figur 1 zeigt schematisch eine Struktur von Datenverarbeitungseinheiten, auf welchen das erfindungsgemässe Verfahren ausführbar ist. Die Struktur weist eine erste Datenverarbeitungseinheit oder Embedded Server 1, eine zweite Datenverarbeitungseinheit oder Applikationsserver 2, eine dritte Datenverarbeitungseinheit oder Komponentenserver 3 und eine vierte Datenverarbeitungseinheit oder Clientrechner 4 auf. Vor Beginn des erfindungsgemässen Verfahrens speichert der Embedded Server 1 eine erste Programmeinheit oder Steuerprogramm 11 und eine zweite Programmeinheit oder Komponentenlader 12. Der Komponentenserver 3 speichert mindestens eine dritte Programmeinheit oder Business-Applikation 13,13',13" und der Clientrechner 4 speichert eine vierte Programmeinheit oder Clientprogramm 14. Die verschiedenen Datenverarbeitungseinheiten sind üblicherweise räumlich voneinander getrennt und weisen jeweils Rechen- und Datenspeichermittel auf. Die Kommunikation zwischen den verschiedenen Datenverarbeitungseinheiten geschieht über beliebige Kommunikationsverbindungen 5 oder Kommunikationsnetzwerke, beispielsweise dem Internet oder einem Intranet, und nach einem allgemein bekannten Protokoll, beispielsweise dem TCP/IP-Protokoll.

Der Embedded oder "eingebettete" Server 1 ist ein Mikrocomputer, der einem Gerät zugeordnet ist und in dieses Gerät ein- oder angebaut ist. Typischerweise weist der Embedded Server 1 keine oder nur sehr einfache Ein/Ausgabemittel, wie beispielsweise Schalter oder Leuchtdioden auf. Das Steuerprogramm 11 des Embedded Servers 1 steuert und überwacht beispielsweise das Gerät und/oder bestimmt und speichert Betriebsdaten des Gerätes. Ein solches Gerät ist beispielsweise eine Mikroturbine oder eine Lokomotive. Geräte melden sich nach dem Einschalten bei einem Clientprogramm 14 einer Zentrale an und richten die Kommunikation mit dem Clientprogramm 14 gemäss dem erfindungsgemässen Verfahren ein. Der Clientrechner 4 zur Ausführung des Clientprogramms 14 steht beispielsweise in einer Leitzentrale zur Überwachung mehrerer Geräte. Die Kommunikation dient beispielsweise der Übermittlung, Aufbereitung und Darstellung von Status-, Diagnose- oder anderer Geräteinformationen. Wie eingangs beschrieben, wird diese Kommunikation über eine Business-Applikation 13 auf einem Applikationsserver 2 abgewickelt, um den Embedded Server 1 zu entlasten. Der Applikationsserver 2 steht beispielsweise in einer Zwischenstation zwischen den Geräten und der Leitzentrale. Der Applikationsserver 2 kann auch mit dem Clientrechner 4 identisch sein, so dass dieselbe Datenverarbeitungseinheit sowohl das Clientprogramm 14 wie auch die Business-Applikation 13 ausführt.

Die Business-Applikation 13, respektive eine entsprechende Programmkomponente, setzt Anfragen des Clientprogramms 14, welches auf dem Clientrechner 4 ausgeführt wird, in Anfragen an das Steuerprogramm 11, welches auf dem Embedded Server 1 ausgeführt wird, um. Antworten des Steuerprogramms 11 werden durch die Business-Applikation 13 in Antworten an das Clientprogramm 14 umgesetzt. Diese Anfragen und Antworten zwischen dem Steuerprogramm 11 und der Business-Applikation 13 entsprechen einem speziellen Protokoll, welches für das Gerät oder eine Geräteklasse typisch ist. In einer bevorzugten Variante der Erfindung entsprechen die Antworten an das Clientprogramm 14 einem HTML-, XML-Protokoll oder einem verwandten Protokoll, so dass ein generischer Web-Browser als Clientprogramm 14 verwendbar ist. Vorzugsweise kann von mehreren verschiedenen Clientrechnern 4 aus über den Applikationsserver 2 auf den Embedded Server 1 zugegriffen werden. Dabei regelt vorzugsweise der Applikationsserver 2 den Zugriff, indem nur berechtigten Clientprogrammen 14 und beispielsweise zur selben Zeit nur einem Clientprogramm 14 ein Zugriff erlaubt wird.

Ziel des erfindungsgemässen Verfahrens ist, eine geeignete Business-Applikation 13 auf dem Applikationsserver 2 zu laden und auszuführen, ohne dass ein manueller Eingriff erforderlich ist. Um dieses Ziel zu erreichen, weist der Embedded Server 1 erfindungsgemäss den Komponentenlader 12 auf. Der Komponentenlader 12 ist in einer bevorzugten Ausführungsform ein Programm in der Programmiersprache Java oder in einer Programmiersprache, welche vergleichbare Lademechanismen, beispielsweise auf Microsoft® -Technologien basierend, aufweist.

Um die oben beschriebene Kommunikation zum Steuerprogramm 11 einzurichten, weist das erfindungsgemässen Verfahren die folgenden Schritte auf:

Figur 2 zeigt schematisch einen ersten Schritt des erfindungsgemässen Verfahrens. Darin wird der Komponentenlader 12 vom Embedded Server 1 über eine nicht gezeichnete Kommunikationsverbindung 5 respektive ein Netzwerk an den Applikationsserver 2 übermittelt. Für diese Übermittlung wird eine Netzwerk- oder IP-Adresse des Applikationsservers 2 benötigt. Diese Adresse ist beispielsweise bereits im Embedded Server 1 gespeichert, oder wird beispielsweise über einen bekannten Jini-Mechanismus mittels eines Lookup-Servers ernittelt. Bei diesem Mechanismus sendet der Komponentenlader 12 oder eine andere Programmeinheit des Embedded Servers 1 eine multicast-Nachricht, um sich bei einem Lookup-Server zu registrieren. Ein Lookup-Server, welcher solche Dienste, wie sie der Embedded Server 1 anbietet, verwaltet, registriert den Embedded Server 1. Der Embedded Server 1 sendet dem Lookup-Server den Komponentenlader 12, wobei der Komponentenlader 12 insbesondere eine IP-Adresse des Embedded Servers 1 beinhaltet. Zu einem beliebigen späteren Zeitpunkt fragt der Applikationsserver 2 den Lookup-Server ab, welche Dienste, welche für den Applikationsserver 2 von Interesse sind, verfügbar sind. Als Antwort wird dem Applikationsserver 2 der Komponentenlader 12 vom Lookup-Server übermittelt. Resultat dieses Mechanismus ist also die indirekte Übermittlung 6 des Komponentenladers 12 vom Embedded Server 1 an den Applikationsserver 2.

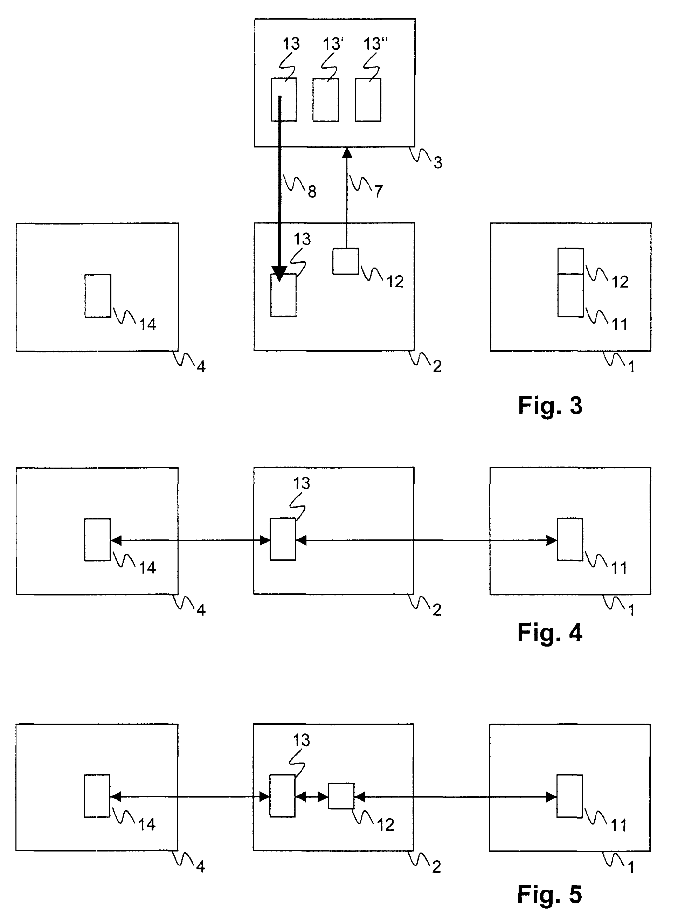

Figur 3 zeigt schematisch einen zweiten Schritt des erfindungsgemässen Verfahrens. Der Komponentenlader 12 weist Informationen darüber auf, welcher Typ von Business-Applikation 13 benötigt wird, und unter welcher Netzwerkadresse der Komponentenserver 3, welcher diese Business-Applikation 13 zur Verfügung stellt, zu finden ist. Der Komponentenserver 3 steht vorzugsweise bei einem Hersteller des Gerätes oder des Steuerprogramms 11. Der Komponentenlader 12 wird in einer ersten Variante des Verfahrens auf dem Applikationsserver 2 ausgeführt und schickt eine Anfrage 7 an den Komponentenserver 3, worauf der Komponentenserver 3 die geeignete Business-Applikation 13 von den mehreren auf dem Komponentenserver 3 gespeicherten Business-Applikationen 13,13',13" dem Applikationsserver 2 übermittelt. In einer zweiten Variante wird die Anfrage 7 an den Komponentenserver 3 durch eine andere Programmeinheit des Applikationsservers 2 anhand der Informationen im Komponentenlader 12 erzeugt. In beiden Varianten wird die Business-Applikation 13 nach der Übermittlung 8 an den Applikationsserver 2 auf diesem installiert respektive geladen sowie ausgeführt.

Um eine logische Kommunikationsverbindung mit dem Clientprogramm 14 zu erstellen oder einzurichten, trägt sich der Komponentenlader 12 beispielsweise in eine Liste von Geräten und Diensten ein, welche auf dem Applikationsserver 2 zur Verfügung stehen respektive verwaltet werden. Nach einer Abfrage dieser Liste durch das Clientprogramm 14 nimmt das Clientprogramm 14 Verbindung zur entsprechenden Business-Applikation 13 auf.

Figuren 4 und 5 zeigen schematisch die bereits beschriebene Kommunikation des Clientprogramms 14 über die Business-Applikation 13 mit dem Steuerprogramim 11 nach Ablauf des erfindungsgemässen Verfahrens. Die bei der Kommunikation ausgetauschten Anfragen respektive Anworten sind durch Pfeile dargestellt. Figur 4 zeigt eine Variante, in welcher die Business-Applikation 13 die Netzwerkadresse des Embedded Servers 1 vom Komponentenlader 12 erhält und danach selber mit dem Steuerprogramm 11 kommuniziert. Figur 5 zeigt eine andere Variante, in der die Kommunikation über den Komponentenlader 12, welcher die Netzwerkadresse des Embedded Servers 1 enthält und die Kommunikation zum Embedded Server 1 bewerkstelligt, abgewickelt wird.

Zusammengefasst läuft das erfindungsgemässe Verfahren also ab, indem der Embedded Server 1, welcher ein Steuerprogramm 11 und einen Komponentenlader 12 aufweist, den Komponentenlader 12 an den Applikationsserver 2 übermittelt. Der Komponentenlader 12 bewirkt, dass die Business-Applikation 13 von einem Komponentenserver 3 an den Applikationsserver 2 übermittelt wird und dort installiert und ausgeführt wird. Die Business-Applikation 13 bewirkt eine Kommunikation zwischen einem Clientprogramm 14, welches auf einem Clientrechner 4 ausgeführt wird, mit dem Steuerprogramm 11, welches auf dem Embedded Server 1 ausgeführt wird.

Der erfindungsgemässe Komponentenlader 12 respektive die zweite Programmeinheit ist also ein Computerprogramm, welches der Einrichtung einer Kommunikationsverbindung zwischen dem Embedded Server 1 des Gerätes und dem Clientrechner 4 dient. Bei einem Betrieb dieser Kommunikationsverbindung ist eine Business-Applikation 13 auf dem Applikationsserver 2 ausführbar. Die Business-Applikation 13 weist Mittel zur Kommunikation mit dem Clientprogramm 14 auf dem Clientrechner 4 und mit einem Steuerprogramm 11 auf dem Embedded Server 1 auf. Das Computerprogramm ist auf dem Embedded Server 1 des Gerätes speicherbar. Das Computerprogramm ist an den Applikationsserver 2 übermittelbar und ist auf dem Applikationsserver 2 ausführbar. Das Computerprogramm weist Mittel zum Laden der Business-Applikation 13 vom Komponentenserver 3 in den Applikationsserver 2 auf.

Das erfindungsgemässe Verfahren und das erfindungsgemässe Computerprogramm eignen sich beispielsweise für eine Verwaltung von Daten von Lokomotiven einer Eisenbahngesellschaft. Dazu weist ein Embedded Server 1 einer Lokomotive im Steuerprogramm 12 unter anderem eine Datenbank auf. Die Datenbank enthält gemessene Betriebsdaten sowie Statusinformationen, Diagnosedaten und andere Daten, die aus einer Analyse der Betriebsdaten stammen, wie beispielsweise eine verfügbare Leistung und zu erwartende Ausfälle. Die Lokomotiven respektive ihre Embedded Server 1 kommunizieren über eine Funkverbindung gemäss einem GSM-Standard mit dem Applikationsserver 2. Der Applikationsserver respektive seine Business-Applikation 13 bedient einen oder mehrer Clientrechner 4, mit welchen die Informationen der Lokomotive abgefragt werden können. Eine Zugriffsberechtigung von Clientprogrammen 14 auf die Embedded Server 1 wird durch die Business-Applikation 13 kontrolliert. Wenn jeweils eine Lokomotive eingeschaltet wird oder in einen bestimmten geographischen Bereich eintritt, wird das erfindungsgemässe Verfahren ausgeführt und damit eine Kommunikationsverbindung zum Applikationsserver 2 und den Clientrechnern 4 erstellt. Der benötigte Kompoentenserver 3 ist vorzugsweise bei einem Hersteller der Steuerprogramme 12 lokalisiert. Auf einem der Clientrechner 4 können auf diese Weise Daten einer ganzen Flotte von Lokomotiven dargestellt und weiterverarbeitet werden. Durch die Kommunikationsverbindungen werden auch weitere Daten einzelner Lokomotiven abgefragt und gegebenenfalls Steuerbefehle an die Lokomotiven ausgegeben.

Eine weitere Anwendung des erfindungsgemässen Verfahrens liegt im Bereich der verteilten Energieerzeugung, beispielsweise durch Mikroturbinen. Ein Park von Mikroturbinen, wobei jede mit einem Embedded Server 1 ausgerüstet ist, ist über das Internet mit einem Applikationssserver 2 verbunden. Die Business-Applikationen der verschiedenen Turbinentypen werden gemäss dem erfindungsgemässen Verfahren eingerichtet. Dadurch wird ein Aufwand zur Verteilung und zur Aufdatierung der Business-Applikationen verkleinert.

### Bezugszeichenliste

- 1: erste Datenverarbeitungseinheit, Embedded Server
- 2: zweite Datenverarbeitungseinheit, Applikationsserver
- 3: dritte Datenverarbeitungseinheit, Komponentenserver
- 4: vierte Datenverarbeitungseinheit, Clientrechner
- 5: Kommunikationsverbindung
- 6: Übermittlung des Komponentenladers
- 7: Anfrage an Applikationsserver
- 8: Übermittlung der Business-Applikation
- 11: erste Programmeinheit, Steuerprogramm
- 12: zweite Programmeinheit, Komponentenlader
- 13: dritte Programmeinheit, Business-Applikation
- 14: vierte Programmeinheit, Clientprogramm

## Patentansprüche

1. Verfahren zum Einrichten einer Kommunikationsverbindung zwischen einem Embedded Server (1) eines Gerätes und einem Clientrechner (4), wobei der Embedded Server (1) ein Steuerprogramm (11) zur Steuerung des Gerätes ausführt, und der Clientrechner (4) ein Clientprogramm (14) zur Darstellung von Daten des Gerätes und zur Eingabe von Steuerbefehlen an das Gerät ausführt, und beim Betrieb dieser Kommunikationsverbindung das Steuerprogramm (11) über eine Business-Applikation (13), welche auf einem Applikationsserver (2) ausgeführt wird, mit dem Clientprogramm (14) kommuniziert, **dadurch gekennzeichnet, dass** zur Einrichtung dieser Kommunikation die folgenden Schritte ausgeführt werden:
a) ein Komponentenlader (12) wird vom Embedded Server (1) an den Applikationsserver (2) übermittelt,
b) der Komponentenlader (12) bewirkt eine Übermittlung der Business-Applikation (13) von einem Komponentenserver (3) an den Applikationsserver (2).

2. Verfahren gemäss Anspruch 1, **dadurch gekennzeichnet, dass** der Komponentenlader (12) vom Embedded Server (1) an den Applikationsserver (2) anhand einer im Embedded Server (1) gespeicherten Netzwerkadresse übermittelt wird

3. Verfahren gemäss Anspruch 1, **dadurch gekennzeichnet, dass** der Komponentenlader (12) vom Embedded Server (1) an den Applikationsserver (2) mittels eines Lookup-Servers übermittelt wird

4. Verfahren gemäss Anspruch 1, **dadurch gekennzeichnet, dass** der Komponentenlader (12) nach der Übermittlung an den Applikationsserver (2) Informationen über eine Netzwerkadresse des Embedded Servers (1) enthält.

5. Verfahren gemäss Anspruch 1, **dadurch gekennzeichnet, dass** der Komponentenlader (12) Informationen über eine Netzwerkadresse des Komponentenservers (3) enthält.

6. Verfahren gemäss Anspruch 1, **dadurch gekennzeichnet, dass** der Komponentenlader (12) auf dem Applikationsserver (2) ausgeführt wird und dadurch die Übermittlung der Business-Applikation (13) vom Komponentenserver (3) an den Applikationsserver (2) bewirkt.

7. Computerprogramm (12) zum Einrichten einer Kommunikationsverbindung zwischen einem Embedded Server (1) eines Gerätes und einem Clientrechner (4), wobei bei einem Betrieb dieser Kommunikationsverbindung eine Business-Applikation (13) auf einem Applikationsserver (2) ausführbar ist und die Business-Applikation (13) Mittel zur Kommunikation mit einem Clientprogramm (14) auf dem Clientrechner (4) und mit einem Steuerprogramm (11) auf dem Embedded Server (1) aufweist, **dadurch gekennzeichnet,**
**dass** das Computerprogramm (12) auf dem Embedded Server (1) des Gerätes speicherbar ist, das Computerprogramm (12) an den Applikationsserver (2) übermittelbar ist und auf dem Applikationsserver (2) ausführbar ist, und
**dass** das Computerprogramm (12) Mittel zum Laden einer Business-Applikation (13) von einem Komponentenserver (3) in den Applikationsserver (2) aufweist.

8. Computerprogramm (12) gemäss Anspruch 7, **dadurch gekennzeichnet, dass** in dem Computerprogramm (12) eine Netzwerkadresse des Komponentenservers (3) gespeichert ist.

9. Computerprogramm (12) gemäss Anspruch 7, **dadurch gekennzeichnet, dass** das Computerprogramm (12) Mittel zum Laden der Business-Applikation (13) vom Komponentenserver (3) auf den Applikationsserver (2) aufweist.

10. Computerprogramm (12) gemäss Anspruch 7, **dadurch gekennzeichnet, dass** das Computerprogramm (12) Mittel zur Kommunikation zwischen der auf der Applikationsserver (2) ausgeführten Business-Applikation (13) und dem Steuerprogramm (11) aufweist.
